Europäisches Patentamt

European Patent Office

Office européen des brevets

(19)

(11) Publication number: **0 236 674 B1**

## EUROPEAN PATENT SPECIFICATION

(12)

(45) Date of publication of patent specification: **16.02.94**    (51) Int. Cl.5: **C08L 23/04**, C08L 83/02, C08K 5/54

(21) Application number: **87100265.5**

(22) Date of filing: **12.01.87**

(54) **Improved mineral filled rubber composites.**

(30) Priority: **13.01.86 US 818151**

(43) Date of publication of application:
**16.09.87 Bulletin 87/38**

(45) Publication of the grant of the patent:
**16.02.94 Bulletin 94/07**

(84) Designated Contracting States:
**DE FR GB**

(56) References cited:
**EP-A- 0 002 830**
**EP-A- 0 075 956**
**EP-A- 0 125 020**
**GB-A- 1 303 432**

(73) Proprietor: **DOW CORNING CORPORATION**
**P.O. Box 1767**
**Midland Michigan 48640(US)**

(72) Inventor: **Collins, Warde Thomas**
**3131 Maple Hill Court**
**Midland, MI 48640(US)**

(74) Representative: **Spott, Gottfried, Dr. et al**
**Patentanwälte Spott und Puschmann**
**Sendlinger-Tor-Platz 11**
**D-80336 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to mineral reinforced rubber used in electrical applications as insulating materials, wherein the mineral filler is treated with a blend of at least two silanes.

Rubber is widely used as an electrical insulating material, and filled rubber has also been used for those purposes. Filled rubber is a composite material comprised of cured rubber and filler incorporated throughout the cured rubber.

In general, two types of fillers are used to reinforce or fill rubber. Carbon black fillers are widely used as reinforcing agents and greatly improve the strength of the rubber composites in which they are incorporated. Nonblack fillers are the fillers other than carbon black. Typically, the nonblack fillers are mineral fillers which require some form of treatment to act as reinforcement in the composites in which they are incorporated. Mineral filled or reinforced rubber is often used instead of rubber because of reduced cost and improved electrical and physical properties over unfilled rubber.

Silanes have been used for a number of years to improve the physical performance of mineral filled or reinforced rubber materials. Some of the improvements imparted by the use of silanes to the filled rubber include improved hardness, flexibility, elasticity, and resistance to weathering. The use of silanes in mineral filled, or reinforced rubber systems is analogous to the use of silanes as coupling agents in other composites, such as laminates. However, because of the elasticity of mineral filled rubber, such systems do not behave precisely as other composites in regards to the optimal choice of silane coupling agents is concerned.

For instance, U.S. Patent No. 2,742,378 issued to Grotenhuis teaches filler materials treated with "vinylsiloxane" groups impart increased flexural strength to polymers filled with said treated fillers. U.S. Patent No. 2,763,629 issued to Gottfurcht discloses glass fibers treated with triethoxyvinylsilane impart improved flexural strength and resistance to hydrolytic degradation of flexural strength when incorporated into polyester resin laminates. U.S. Patent No. 3,013,915 issued to Morgan teaches vinylsilanes effectively treat glass fibers so that polyolefins filled with the treated glass fibers have improved physical properties and weatherability.

The use of silanes in filled electrical insulating materials is disclosed in U.S Patent No. 3,533,348 issued to Betts. Betts specifically discloses an electrical insulating composition for coating wire and cable comprising cross-linked ethylene copolymer, chlorine containing polymer (for fire resistance), and magnesium silicate filler treated with alkoxysilane. One of the alkoxy silanes particularly taught is vinyltris-(2-methoxyethoxy)silane.

Blends of different silanes are used as coupling agents for glass reinforced laminates. For instance, U.S. Patent No. 3,317,369 issued to Plueddemann teaches that a blend of silanes comprised of acryloxyalkyl substituted silanes of the formula $RSiX_3$, where R denotes an acryloxyalkyl radical and X represents a hydrolyzable radical, and methyldimethoxyphenylsilane gives improved flexural strength to glass fiber reinforced polyester laminates.

Ashcraft in U.S. Patent No. 4,144,202 teaches that water treeing in ethylene polymers can be inhibited by the addition of 0.5 to 2 percent epoxy functional silanes to the unfilled polymers. U.S. Patent No. 4,229,713 issued to Maringer discloses the use of silane blends as anti-treeing additives in unfilled polymeric compositions. Specifically, Maringer teaches incorporating 2 weight percent of vinyl-tris-(methoxyethoxy)silane in polyethylene inhibits electrical treeing.

The mineral filler in reinforced rubber is often treated with a silane coupling agent to improve the electrical and physical properties of the material. Generally, silane treated fillers produce high quality reinforced rubber. However, it has been found that the electrical insulating properties of such reinforced rubber degrade upon exposure to water, or moisture. A mineral reinforced rubber which showed increased weatherability over standard reinforced rubber would be useful in electrical insulation applications which subject the electrical components to adverse weather and moisture conditions.

This invention is a mineral filler reinforced rubber composite which comprises a rubber matrix material, a mineral filler dispersed in the rubber matrix which has been treated with a blend of at least two silanes where the first silane (a) is of the general formula

$R_nSiX_{4-n}$

where R denotes a vinyl or allyl radical which can react chemically with the rubber matrix material, X denotes a hydrolyzable radical such as alkoxy, acyloxy, halo, hydroxy, or alkoxyalkoxy, and n is 1 or 2; and the second silane (b) is of the general formula

$$R'_m SiY_{4-m}$$

where R' denotes an aromatic radical such as phenyl, benzyl, napthyl, or the like, Y denotes a hydrolyzable radical such as alkoxy, acyloxy, halo, hydroxy, or alkoxyalkoxy, and m equals 1, or 2.

The mineral filler reinforced rubber composites of the invention can be used to coat wires, and to encapsulate electronic components.

The invention is a reinforced rubber which comprises a vulcanized, or vulcanizeable, rubber matrix material, mineral filler dispersed in the rubber matrix material, and a mixture of at least two silanes where the first silane (a) contains at least one alkenyl radical, and the second silane (b) contains at least one radical with aromatic character such as a phenyl radical. The invention also relates to mineral fillers treated with said mixture of at least two silanes.

The vulcanized or vulcanizeable rubber matrix material encompassed within the invention includes ethylene-propylene rubber (EPR), ethylene-propylene terpolymer rubber (EPDM), cross-linked polyethylene rubber, and silicone rubber. These types of rubber are commercially available, and can be vulcanized by a variety of methods well known in the prior art. The silanes of the invention interact with the rubber matrix material most effectively during the vulcanization of the rubber matrix. Preferably, the rubber matrix material is cured subsequent to the incorporation of the mineral filler and silane blend with the rubber matrix material.

The mineral fillers encompassed by the invention include, but are not limited to, calcined clay, titanium dioxide, hydrated silica, hydrated sodium silicate, magnesium carbonate, kaolin, aluminum hydroxide (bauxite), basic aluminum sulfate, precipitated calcium carbonate, alumina silicate, hydrous alumina silicate, and other nonblack fillers. Preferably, commercially available fillers are used which are compatible with the rubber matrix material, and which have the particle size and structure best suited for acting as reinforcement of the rubber matrix material.

The present invention also provides a mineral filler treating composition of at least two silanes; an alkenyl radical containing silane (a) and an aromatic radical containing silane (b).

The alkenyl containing silanes (a) encompassed by the invention are of the general formula

$$R_n SiX_{4-n}$$

where R denotes a vinyl or allyl radical which can chemically react with the matrix material and remain chemically bonded to the silicon atom, X denotes a hydrolyzable radical, and n is 1 or 2. The R radical chosen will depend upon the character of the rubber matrix material being employed. For instance, in the case of an ethylene-propylene rubber, EPR, vinyl is preferred due to its high reactivity and commercial availability. X includes, but is not necessarily limited to, alkoxy radicals containing 1 to 5 carbon atoms, acyloxy radicals with 2 to 5 carbon atoms, halo, or alkoxyalkoxy radicals which contain 2 to 10 carbon atoms.

Specific alkenylsilanes within the limits of the invention are trimethoxyvinylsilane, triacetoxyvinylsilane, tris-(2-methoxyethoxy)vinylsilane, allyltrimethoxysilane, trichlorovinylsilane, tripropoxyvinylsilane, tributoxyvinylsilane, tributyryloxyvinylsilane, alkyltriiosvaleryloxysilane, or tris(2-ethoxypropoxy)vinylsilane.

The aromatic-radical containing silane (b) is of the general formula

$$R'_m YSiY_{4-m}$$

where R' denotes an aromatic radical. For example, R' could be a phenyl, tolyl, napthyl, or like radicals. Preferably, R' is chosen so that the silane is commercially available and usually sill be phenyl. Y denotes a hydrolyzable radical as defined for the alkenylsilane, ie. Y denotes alkoxy, acyloxy, alkoxyalkoxy, halo, or the like. m is 1 or 2. Preferably, m is 1. Specific silanes include phenyltrimethoxysilane, dimethoxydiphenylsilane, trichlorophenylsilane, tributoxyphenylsilane, triisopentoxybenzylsilane, phenyltripropionyloxysilane, napthyltrivaleryloxysilane, and tris(2-methoxyethoxy)phenylsilane.

The ratio of (b) to (a) will depend upon the nature of the rubber matrix, the effectiveness of the alkenyl containing silane as a coupling agent, and the a mount of silane blend being used to treat the mineral filler. Preferably, the a romatic radical containing silane should comprise between 25 to 85 weight percent of the silane blend. Most preferably, the aromatic radical containing silane provides at least 60 percent of the silane blend by weight.

The silane blends should be employed in levels from 0.2 to 3 weight percent of the mineral filler material.

3

The proportion of the components of the invention can vary. The mineral filler should comprise between 30 and 200 parts by weight per 100 parts by weight of the rubber matrix material. The amount of silane blend employed varies according to the weight of mineral filler used in the particular embodiment,

Preferably 0,06 to 6 parts by weight of the silane blend per 100 parts by weight of the rubber matrix material are used, but typically the amount of silane blend comprises less than 1 weight percent of the reinforced rubber composite.

The mineral reinforced rubber composites of the invention can be made by a variety of methods. The filler can be treated with the silane blend before being incorporated into the rubber matrix material, or the silane blend can be added to a mixture of the uncured rubber matrix material and mineral filler so the filler is treated in situ. The mineral filler can be treated with the silane blends several ways. For instance, the silane blend can be mixed directly with the filler, or, alternately, the silane blend can be mixed with organic solvent or water to form a slurry which can be added mixed with filler.

The improved electrical properties of the invention are believed to be attributable to the ability of the aromatic radical containing silane to bear electrical loads. Both the alkenylsilane and aromatic radical containing silane interact with the surface of the mineral filler, so a relatively high concentration of both silanes exists in the interfacial region between the filler and matrix of the reinforced rubber. The electrical load bearing capacity of the aromatic radical containing silanes of the invention in conjunction with the coupling agent activity of the alkenylsilane improves the electrical properties of the reinforced rubber at the interfacial portion between the mineral filler and rubber matrix material of the reinforced rubber. The exact reason for the improved electrical properties is not understood, and this explanation is not intended to limit the scope of the invention which is defined in the claims.

The following example illustrates the invention, but does not fully delineate the full scope of the invention. An example outside the scope of the invention is included for comparison.

## EXAMPLE 1

Calcined clay was treated with a blend of silanes comprised of 60 wt. % phenyltrimethoxysilane and 40 wt. % triacetoxyvinylsilane. The silane blend was added neat to the calcined clay at 1 wt. %, the mixture was mixed to disperse the silane throughout the clay, and the mixture was dried. The treated clay was compounded with an ethylene-propylene rubber to form a mixture comprised of 100 parts of an ethylene-propylene rubber gum (Vistalon 404 EPR sold by Huber Corp., Macon, Georgia), 75 parts of the treated clay, 5 parts of zinc oxide, 0.5 part of the antioxidant Agerite Resin D (R.T. Vanderbilt Co., Inc., N.Y., N.Y.), and 10 parts of dicumyl peroxide (Di Cup 40C, The Hercules Powder Co., Inc., Wilmington, Delaware). The mixture was compounded into two slabs (slab A and slab A'). Slab A was vulcanized at 330°C for 25 minutes, and slab A' was cured at 330°C for 50 minutes.

Slabs B and B' were made in the same manner except the silane blend was replaced with an equivalent weight of triacetoxyvinylsilane. Slab B was cured at 330°C for 25 minutes, slab B' for 50 minutes. Slabs C and C' were made using the same methods except the silane blend comprised 70 wt. % phenyltrimethoxysilane, and 30 wt. % triacetoxyvinylsilane.

All slabs were characterized with respect to their physical and electrical properties using standard ASTM test methods. Particularly, the hardness, 100% moduli, 200% moduli, 300% moduli, tensile strength, and elongation of each slab were measured. These results are summarized in the following table.

PHYSICAL PROPERTIES OF CLAY REINFORCED RUBBER SLABS

| | A/A' | B/B' | C/C' |
|---|---|---|---|
| 100% Modulas, psi (bar) | 280/280 19,3/19,3 | 230/240 15,8/16,5 | 290/270 20/18,6 |
| 200% Modulas, psi (bar) | 590/560 40,7/38,6 | 570/570 39,3/39,3 | 570/500 39,3/34,5 |
| 300% Modulas, psi (bar) | 740/760 51/52,4 | 810/860 55,8/59,3 | 710/760 49/52,4 |
| tensile strength, psi (bar) | 810/810 55,8/55,8 | 870/850 60/58,6 | 800/770 55,2/53,1 |
| elongation, % | 310/350 | 340/330 | 380/400 |
| hardness (Shore A) | 58/58 | 58/59 | 58/58 |

The physical properties of slabs A, A′, C, and C′ are similar to the physical properties of slabs B and B′ which reflect the state of the art in treating clay used in reinforced rubber.

The electrical properties of slabs A′, B′, and C′, which were cured for 50 minutes, are reported in the following table. The dielectric constant and dissipation factor were determined using the methods described in ASTM D 150. The volume resistivity was determined using the method of ASTM D 257.

ELECTRICAL PROPERTIES OF TREATED CLAY REINFORCED RUBBER SLABS

|  | A′ | B′ | C′ |
|---|---|---|---|
| Dielectric Constant, 10*2 Hz | 2.6 | 2.6 | 2.6 |
| Dielectric Constant, 10*5 Hz | 2.5 | 2.5 | 2.5 |
| Dissipation Fact. 10*2 Hz | $4.2 \times 10^{-3}$ | $3.7 \times 10^{-3}$ | $4.0 \times 10^{-3}$ |
| Dissipation Fact. 10*5 Hz | $2.6 \times 10^{-3}$ | $3.0 \times 10^{-3}$ | $3.6 \times 10^{-3}$ |
| Volume Resistivity (ohm/cm.) | $3.1 \times 10^{15}$ | $1.7 \times 10^{15}$ | $1.4 \times 10^{15}$ |

The values in the table represent the measured value of each slab under dry conditions. The slabs made with the calcined clay treated with the silane blend show roughly similar dry electrical properties. The three slabs were immersed in water for 1 day and their electrical properties were remeasured.

ELECTRICAL PROPERTIES AFTER 1 DAY $H_2O$ IMMERSION

|  | A′ | B′ | C′ |
|---|---|---|---|
| Dielectric Constant, 10*2 Hz | 2.7 | 2.6 | 2.6 |
| Dielectric Constant, 10*5 Hz | 2.6 | 2.5 | 2.5 |
| Dissipation Fact. 10*2 Hz | $20 \times 10^{-3}$ | $13 \times 10^{-3}$ | $7.7 \times 10^{-3}$ |
| Dissipation Fact. 10*5 Hz | $4.9 \times 10^{-3}$ | $5.6 \times 10^{-3}$ | $4.8 \times 10^{-3}$ |
| Volume Resistivity | $1.0 \times 10^{15}$ | $0.46 \times 10^{15}$ | $3.2 \times 10^{15}$ |

The slabs using the silane blends of the invention displayed less degradation of volume resistivity than the comparative example B′. The three slabs were immersed for six more days and the electrical properties were remeasured.

ELECTRICAL PROPERTIES AFTER 7 DAY $H_2O$ IMMERSION

|  | A' | B' | C' |
|---|---|---|---|
| Dielectric Constant, 10*2 Hz | 2.7 | 3.1 | 2.7 |
| Dielectric Constant, 10*5 Hz | 2.6 | 2.5 | 2.6 |
| Dissipation Fact. 10*2 Hz | $25 \times 10^{-3}$ | $132 \times 10^{-3}$ | $59 \times 10^{-3}$ |
| Dissipation Fact. 10*5 Hz | $7.2 \times 10^{-3}$ | $5.6 \times 10^{-3}$ | $17 \times 10^{-3}$ |
| Volume Resistivity | $1.1 \times 10^{15}$ | $0.13 \times 10^{15}$ | $0.65 \times 10^{15}$ |

The standard rubber composite, B', showed marked degradation of its volume resistivity from the dry measurements. An overall loss of greater than 90 percent was observed in slab B', whereas the slabs encompassed in the invention, A' and C', showed volume resistivity losses of less than 70 percent from their dry volume resistivities. Similar resistance to the degradative affects of water immersion are displayed in the dissipation factors of slabs A' and C' at $10^2$Hz.

**Claims**

1. A reinforced rubber composite which comprises;
   (I) a rubber matrix material;
   (II) a mineral filler incorporated in the rubber matrix material; and
   (III) a blend of at least two silanes, where the first silane (a) is of the general formula

   $R_nSiX_{4-n}$

   where R denotes a vinyl or allyl radical, X denotes an alkoxy, acyloxy, halo, hydroxy, or alkoxyalkoxy radical, and n is 1 or 2; and the second silane (b) is of the general formula

   $R'_mSiY_{4-m}$

   where R' denotes a phenyl, benzyl, tolyl, or napthyl radical, Y denotes an alkoxy, acyloxy, halo, hydroxy, or alkoxyalkoxy radical, and m equals 1, or 2.

2. The reinforced rubber composite of claim 1 wherein said composite comprises between 30 and 200 parts by weight of the mineral filler (II) and between 0.06 and 6 parts by weight of the silane blend per 100 parts by weight of the rubber matrix material (I).

3. The reinforced rubber composite of claim 1 wherein the rubber matrix material is chosen from the group consisting of ethylene propylene rubber, crosslinked polyethylene rubber, ethylene propylene terpolymer rubber, or silicone rubber.

4. The reinforced rubber composite of claim 1 wherein (b) comprises between 25 and 85 weight percent of the silane blend (III).

5. The reinforced rubber composite of claim 4 wherein (b) comprises at least 60 weight percent of the silane blend (III).

6. The reinforced rubber composite of claim 5 wherein the first silane (a) is triacetoxyvinylsilane, and the second silane (b) is phenyltrimethoxysilane.

7. The reinforced rubber composite of claim 6 wherein the rubber matrix material is an ethylene-propylene rubber, and the mineral filler is calcined clay.

8. Treated mineral filler which comprises;
(I) mineral filler; and
(II) a blend of at least two silanes, where the first silane (a) is of the general formula

$$R_nSiX_{4-n}$$

where R denotes a vinyl or allyl radical, X denotes an alkoxy, acyloxy, halo, hydroxy, or alkoxyalkoxy radical, and n is 1 or 2; and the second silane (b) is of the general formula

$$R'_mSiY_{4-m}$$

where R' denotes a phenyl, benzyl, or napthyl radical, Y denotes an alkoxy, acyloxy, halo, hydroxy or alkoxyalkoxy radical, and m equals 1 or 2.

9. A method for making mineral filler reinforced rubber with improved electrical properties which comprises; mixing an uncured rubber matrix material, a mineral filler, and a mixture comprised of at least two silanes, where the first silane (a) is of the general formula

$$R_nSiX_{4-n}$$

where R denotes a vinyl or allyl radical, X denotes an alkoxy, acyloxy, halo, hydroxy, or alkoxyalkoxy radical, and n is 1 or 2; and the second silane (b) is of the general formula

$$R'_mSiY_{4-m}$$

where R' denotes a phenyl, benzyl, or napthyl radical, Y denotes an alkoxy, acyloxy, halo, hydroxy, or alkoxyalkoxy radical and m equals 1, or 2, and curing the mixture.

10. A mineral filler treating composition consisting essentially of;
a silane (a) of the general formula

$$R_nSiX_{4-n}$$

where R denotes a vinyl or allyl radical, X denotes an alkoxy, acyloxy, halo, hydroxy, or alkoxyalkoxy radical, and n is 1 or 2; and
a silane (b) of the general formula

$$R'_mSiY_{4-m}$$

where R' denotes a phenyl, benzyl, or napthyl radical, Y denotes an alkoxy, acyloxy, halo, hydroxy, or alkoxyalkoxy radical and m equals 1, or 2, and (b) comprises between 60 and 85 weight percent of the composition.

**Patentansprüche**

1. Verstärktes Kautschukverbundmaterial, umfassend:
(I) ein Kautschukmatrixmaterial;
(II) einen mineralischen Füllstoff, der in das Kautschukmaterial eingearbeitet ist; und
(III) eine Mischung von mindestens zwei Silanen, wobei das erste Silan (a) die allgemeine Formel

$$R_nSiX_{4-n}$$

hat, worin R einen Vinyl- oder Allylrest bezeichnet, X einen Alkoxy-, Acyloxy-, Halogen-, Hydroxy- oder Alkoxyalkoxyrest bezeichnet und n 1 oder 2 ist, und das zweite Silan (b) die allgemeine Formel

$$R'_mSiY_{4-m}$$

hat, worin R' einen Phenyl-, Benzyl-, Tolyl- oder Naphthylrest bezeichnet, Y einen Alkoxy-, Acyloxy-, Halogen-, Hydroxy- oder Alxoxyalkoxyrest bezeichnet und m 1 oder 2 ist.

2. Verstärktes Kautschukverbundmaterial nach Anspruch 1, worin das Verbundmaterial 30 bis 200 Gew.-Teile des mineralischen Füllstoffs (II) und 0,06 bis 6 Gew.-Teile der Silanmischung pro 100 Gew.-Teile Kautschukmatrixaterial (I) umfaßt.

3. Verstärktes Kautschukverbundmaterial nach Anspruch 1, worin das Kautschukmatrixmaterial ausgewählt ist aus der Gruppe bestehend aus Ethylenpropylenkautschuk, vernetztem Polyethylenkautschuk, Ethylenpropylenterpolymerkautschuk oder Silikonkautschuk.

4. Verstärktes Kautschukverbundmaterial nach Anspruch 1, worin (b) 25 bis 85 Gew.-% der Silanmischung (III) ausmacht.

5. Verstärktes Kautschukverbundmaterial nach Anspruch 4, worin (b) mindestens 60 Gew.-% der Silanmischung (III) ausmacht.

6. Verstärktes Kautschukverbundmaterial nach Anspruch 5, worin das erste Silan (a) Triacetoxyvinylsilan ist und das zweite Silan (b) Phenyltrimethoxysilan ist.

7. Verstärktes Kautschukverbundmaterial nach Anspruch 6, worin das Kautschukmatrixmaterial ein Ethylenpropylenkautschuk ist und der mineralische Füllstoff gebrannter Ton ist.

8. Behandelter mineralischer Füllstoff, umfassend:
(I) einen mineralischen Füllstoff und
(II) eine Mischung von mindestens zwei Silanen, wobei das erste Silan (a) die allgemeine Formel

$$R_nSiX_{4-n}$$

hat, worin R einen Vinyl- oder Allylrest bezeichnet, X einen Alkoxy-, Acyloxy-, Halogen-, Hydroxy- oder Alkoxyalkoxyrest bezeichnet und n 1 oder 2 ist, und das zweite Silan (b) die allgemeine Formel

$$R'_mSiY_{4-m}$$

hat, worin R' einen Phenyl-, Benzyl- oder Naphthylrest bezeichnet, Y einen Alkoxy-, Acyloxy-, Halogen-, Hydroxy- oder Alkoxyalkoxyrest bezeichnet und m 1 oder 2 ist.

9. Verfahren zur Herstellung eines mit mineralischem Füllstoff verstärkten Kautschuks mit verbesserten elektrischen Eigenschaften, umfassend, daß man ein ungehärtetes Kautschukmatrixmaterial, einen mineralischen Füllstoff und eine Mischung vermischt, die mindestens zwei Silane umfaßt, wobei das erste Silan (a) die allgemeine Formel

$$R_nSiX_{4-n}$$

hat, worin R einen Vinyl- oder Allylrest bezeichnet, X einen Alkoxy-, Acyloxy-, Halogen-, Hydroxy- oder Alkoxyalkoxyrest bezeichnet und n 1 oder 2 ist, und das zweite Silan (b) die allgemeine Formel

$$R'_mSiY_{4-m}$$

hat, worin R' einen Phenyl-, Benzyl- oder Naphthylrest bezeichnet, Y einen Alkoxy-, Acyloxy-, Halogen-, Hydroxy- oder Alkoxyalkoxyrest bezeichnet und m 1 oder 2 ist, und die Mischung härtet.

10. Behandlungszusammensetzung für einen mineralischen Füllstoff, bestehend im wesentlichen aus:
einem Silan (a) der allgemeinen Formel

$$R_nSiX_{4-n} ,$$

worin R einen Vinyl- oder Allylrest bezeichnet, X einen Alkoxy-, Acyloxy-, Halogen-, Hydroxy- oder Alkoxyalkoxyrest bezeichnet und n 1 oder 2 ist, und
einem Silan (b) der allgemeinen Formel

$R'_mSiY_{4-m}$ ,

worin R' einen Phenyl-, Benzyl- oder Naphthylrest bezeichnet, Y einen Alkoxy-, Acyloxy-, Halogen-, Hydroxy- oder Alkoxyalkoxyrest bezeichnet und m 1 oder 2 ist,
und (b) 60 bis 85 Gew.-% der Zusammensetzung bildet.

**Revendications**

1.  Composite de caoutchouc renforcé, comprenant :
    (I) un matériau matrice en caoutchouc ;
    (II) une charge minérale incorporée dans le matériau matrice en caoutchouc ; et
    (III) un mélange d'au moins deux silanes, où le premier silane (a) répond à la formule générale

    $R_nSiX_{4-n}$

    où R signifie un radical vinyle ou allyle, X signifie un radical alcoxy, acyloxy, halogéno, hydroxy ou alcoxyalcoxy, et n vaut 1 ou 2 ; et le deuxième silane (b) répond à la formule générale

    $R'_mSiY_{4-m}$

    où R' signifie un radical phényle, benzyle, tolyle ou naphtyle, Y signifie un radical alcoxy, acyloxy, halogéno, hydroxy ou alcoxyalcoxy, et m égale 1 ou 2.

2.  Composite de caoutchouc renforcé selon la revendication 1, ledit composite comprenant entre 30 et 200 parties en poids de la charge minérale (II) et entre 0,06 et 6 parties en poids du mélange de silanes pour 100 parties en poids du matériau matrice en caoutchouc (I).

3.  Composite de caoutchouc renforcé selon la revendication 1, où le matériaux matrice en caoutchouc est choisi dans le groupe constitué par le caoutchouc d'éthylène-propylène, le caoutchouc de polyéthylène réticulé, le caoutchouc de terpolymère éthylène-propylène ou le caoutchouc de silicone.

4.  Composite de caoutchouc renforcé selon la revendication 1, où (b) comprend entre 25 et 85 % en poids du mélange de silanes (III).

5.  Composite de caoutchouc renforcé selon la revendication 4, où (b) comprend au moins 60 % en poids du mélange de silanes (III).

6.  Composite de caoutchouc renforcé selon la revendication 5, où le premier silane (a) est le triacétoxyvinylsilane, et le deuxième silane (b) est le phényltriméthoxysilane.

7.  Composite de caoutchouc renforcé selon la revendication 6, où le matériau matrice en caoutchouc est un caoutchouc d'éthylène-propylène, et la charge minérale est de l'argile calcinée.

8.  Charge minérale traitée, comprenant :
    (I) une charge minérale ; et
    (II) un mélange d'au moins deux silanes, où le premier silane (a) répond à la formule générale

    $R_nSiX_{4-n}$

    où R signifie un radical vinyle ou allyle, X signifie un radical alcoxy, acyloxy, halogéno, hydroxy ou alcoxyalcoxy, et n vaut 1 ou 2 ; et le deuxième silane (b) répond à la formule générale

    $R'_mSiY_{4-m}$

9

où R' signifie un radical phényle, benzyle ou naphtyle, Y signifie un radical alcoxy, acyloxy, halogéno, hydroxy ou alcoxyalcoxy, et m égale 1 ou 2.

9. Procédé de préparation d'un caoutchouc renforcé avec une charge minérale, ayant des propriétés électriques améliorées, comprenant les étapes consistant à mélanger un matériau matrice en caoutchouc non durci, une charge minérale et un mélange constitué d'au moins deux silanes, où le premier silane (a) répond à la formule générale

$R_nSiX_{4-n}$

où R signifie un radical vinyle ou allyle, X signifie un radical alcoxy, acyloxy, halogéno, hydroxy ou alcoxyalcoxy, et n vaut 1 ou 2 ; et le deuxième silane (b) répond à la formule générale

$R'_mSiY_{4-m}$

où R' signifie un radical phényle, benzyle ou naphtyle, Y signifie un radical alcoxy, acyloxy, halogéno, hydroxy ou alcoxyalcoxy, et m égale 1 ou 2, et faire durcir le mélange.

10. Composition de traitement d'une charge minérale, comprenant essentiellement :
un silane (a) de formule générale

$R_nSiX_{4-n}$

où R signifie un radical vinyle ou allyle, X signifie un radical alcoxy, acyloxy, halogéno, hydroxy ou alcoxyalcoxy, et n vaut 1 ou 2 ; et
un silane (b) de formule générale

$R'_mSiY_{4-m}$

où R' signifie un radical phényle, benzyle ou naphtyle, Y signifie un radical alcoxy, acyloxy, halogéno, hydroxy ou alcoxyalcoxy, et m égale 1 ou 2, et (b) constitue entre 60 et 85 % en poids de la composition.